# EUROPEAN PATENT APPLICATION

(11) **EP 2 065 817 A1**
(43) Date of publication of application: **03.06.2009**
(21) Application number: 07291418.7
(22) Date of filing: 28.11.2007
(51) Int. Cl.: G06F 17/30

(54) **Content catalog server**

(71) Applicant: Alcatel Lucent, 75008 Paris (FR)
(72) Inventor: Coppens, Jan, 9000 Gent (BE); Stevens, Christoph, 9190 Stekene (BE); Justen, Pascal, 1150 Brussel (BE); Liekens, Werner, 2860 Sint-Katelijne-Waver (BE); Bouchat, Christele, 2060 Antwerpen (BE); Acke, Willem, 2820 Rijmenam (BE)
(74) Representative: D'Halleweyn, Nele Veerle Trees Gertrudis

(57) **Abstract**

The present invention relates to a content catalog server (CCS) that is part of a network, wherein said content catalog server provides an inventory of available content in said network. According to the present invention a CCS is provided that improves the ease of use, wherein the CCS comprises
- a data-communication interface over which content information can be received from an external device, said content information comprising a list of shareable content stored on said external device,
- processing means to process said content information, **characterized in that** said processing means are arranged to incorporate said content information in a content catalog, wherein said content catalog can be queried and comprises information regarding location and connection status of said shareable content.

## Description

The present invention relates to a content catalog server (CCS) that is part of a network, wherein said content catalog server provides an inventory of available content in said network.

During recent years, several previously independent devices, as for example televisions and computers, have become more and more interconnected. Nowadays, an in-house network may comprise a personal computer, an external hard drive with networking capabilities, a television, audio equipment, and a gateway that provides a connection to the Internet. Network users often want to play content on a device, for instance a television or audio equipment, that is stored on another device. For instance, the user wishes to display a movie on the television that is stored on the personal computer or wishes to play an mp3 file that is stored on the external hard drive.

Known solutions are available to enable this function. For example, a personal computer can be used to connect to different devices in a network and play the content stored thereon. Typically, this is done by so-called drive-mapping. In this technique, a virtual drive on the personal computer is created that corresponds to part of the physical storage of an external device. This process is also referred to as mounting the external device.

A drawback of this approach is that the personal computer has to be connected to the external device in order for the user to browse the content of that device. If this device is not connected, the user has no means to query its content. If a user wishes to play specific content but does not remember on which device this content is stored, the user has to switch on all possible devices, connect them to the personal computer and search for the specific content. This process is quite time-consuming. Furthermore, if the personal computer is switched off, most information about the external content is lost. Hence, the user is inclined to leave all relevant devices on.

The object of the present invention is to provide a content catalog server (CCS) that improves the ease of use for a user of a network with distributed content.

According to the invention, this goal can be achieved with a CCS comprising a data-communication interface over which content information can be received from an external device, wherein said content information comprises a list of shareable content stored on said external device. The CCS further comprises processing means to process said content information. The processing means are arranged to incorporate said content information in a content catalog, wherein said content catalog can be queried and comprises information regarding location and connection status of said shareable content.

The use of a catalog instead of mounting external devices has the advantage that the information is maintained even if the external device is disconnected. When mounting external devices, pointers to the externally stored content are provided. When the external device is disconnected these pointers no longer exist. The use of a catalog in which the information is incorporated is a different approach.

Once an external device has connected to the CCS and supplied it with a list of its shareable content, this list is incorporated in the catalog. This list provides information about the location of the content, e.g. on which external device the content is stored, and information about the connection status of this information, e.g. whether the external device is connected so that the content can be accessed. Disconnecting the external device does not alter the list of shareable content present in the catalog, however it does change the corresponding connection status.

It is important to note that the CCS according to the present invention can be part of a device that also performs other functions, or it can be a more dedicated device.

In a preferred embodiment, the CCS is arranged such that the content catalog can be queried by an external device having a data-communication link to the CCS. Hence, other devices connected to the CCS can query the catalog, and by doing so, obtain information about the shareable content that is available in the network. According to the invention, it is therefore possible to have a network comprising a CCS and a plurality of devices with shareable content, wherein the CCS provides a catalog of all shareable content in that network to all devices. In this way, the individual devices do not need to query all other devices for shareable content but a common central catalog can be used instead.

It is advantageous if the content catalog comprises a class structure corresponding to a type of said shareable content. This feature, which can be an additional or alternative feature in an embodiment of the present invention, improves the ease of use, especially when dealing with large amounts of content. For instance, the catalog could comprise a music, video and photo class. When an external device is connected to the CCS and announces its list of shareable content, the processing means incorporate this list in the catalog but at the same time classify this information and put the information in the appropriate class. The type of shareable content could for instance be determined by a file extension, e.g. mp3 for music and .avi for movies. However, other ways of identifying the type of content are possible, for instance by inspecting a small portion, e.g. the header, of a file.

Other or additional improvements can be obtained if the CCS comprises filtering means which filter a query by an external device based on a type of shareable content supported by said external device. This feature, which can be an additional or alternative feature in an embodiment of the present invention, further improves the ease of use. For instance, an mp3 player only capable of playing mp3 music files, does not need to know about all the other types of content that are available. By filtering out non-supported content, a user can more quickly select relevant content.

The security of the network comprising a CCS can be improved if the content catalog comprises security information relating to said shareable content. For instance, movies stored on a personal computer that contain explicit language or violence, can be tagged such that only a limited amount of users or a group of users can access that content. Apart from tagging other means to couple security information can be used, for instance techniques similar to the security possibilities of the UNIX file system. Also this feature can be an additional or alternative feature in an embodiment of the present invention.

It is advantageous if the CCS is arranged to share the content catalog with an external device. This feature, which can be an additional or alternative feature in an embodiment of the present invention, enhances the functionality of the content catalog. An example that demonstrates added value of this feature is when two networks that each have a separate CCS are coupled. By coupling the two CCS they can share their corresponding catalogs resulting in two substantially equal catalogs that are stored on two CCS.

The device in which the CCS is implemented, or the actual CCS if it used as a dedicated device, needs to be switched on in order for other devices to be able to query the catalog. It is therefore advantageous if the device corresponding to the CCS is a device which is normally on. Most in-house computer networks today comprise a gateway for connecting to the Internet. This makes the gateway a suitable device for implementing the CCS. In addition to gateways, switches, routers or a combination of these devices can also be used. This feature, which can be an additional or alternative feature in an embodiment of the present invention, minimizes the impact on energy consumption by the CCS.

To implement the CCS additional hardware and or software may be needed. However, some network devices, for example some gateways, switches or routers, support software platforms that enable the installation of additional software. Examples of such platforms are Native Linux, Microsoft Windows, .NET and OSGi. All these platforms are well known to the skilled person in the art. A further detailed description is therefore deemed unnecessary.

OSGi is particularly useful for the implementation of the CCS, because it offers the possibility to remotely install programs, install updates and or perform other maintenance tasks. This opens the possibility that the CCS can be installed on existing devices without necessary hardware changes. A user already having a network with an OSGi compliant device could for instance order the CCS from a vendor, which would remotely install the software and perform necessary updates and configurations. This feature can be an additional or alternative feature in an embodiment of the present invention.

The different devices in the network need to communicate with each other. For this a suitable protocol is needed. Although several protocols, all known to the skilled person in the art, can be used, for instance TCP/IP, HTTP, UDP, XML, the Universal Plug and Play (UPnP) has particular advantages. This protocol is media and device independent. Devices that support this protocol can be interconnected even if they run different operating systems or are based on different programming languages. In addition, the UPnP protocol takes away many of the steps a user had to do with older protocols to setup a connection between two devices, e.g. computers. Examples of such steps are device/service discovery, service description, service control and eventing. The UPnP protocol therefore provides easy connectivity between devices. The UPnP feature can be an additional or alternative feature in an embodiment of the present invention.

The processing means of the CCS can be arranged to automatically update the content catalog based on received content information. This could for instance occur when a device in the network has its shareable content changed, e.g. content is removed, added, renamed or the security properties of the content are changed. Once the device is connected to the CCS, the catalog is updated to reflect these changes. This could for instance be realized at the moment the device is connected to the CCS. Another option would be if the device routinely sends a list of its content to the CCS. It could also send this information only if the content changes or if the CCS asks for this information. The automatic update feature of the CCS can be an additional or alternative feature in an embodiment of the present invention.

The invention will be further described with reference to the accompanying drawings, in which:
Figure 1 illustrates a preferred configuration of a CCS in a network;
Figure 2a and 2b show network configurations comprising two CCS.
Figure 3 shows an example of content information.

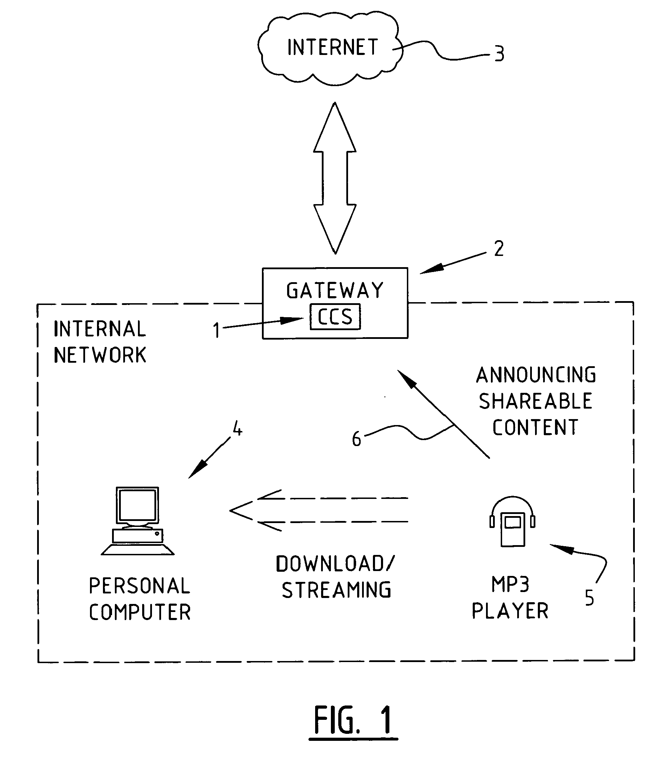

In figure 1, a CCS 1 is implemented in an OSGi compliant gateway 2. This gateway is connected to the Internet 3 and an internal network comprising a personal computer 4 and an mp3 player 5 which is capable of announcing its shareable content to the CCS as indicated by arrow 6. The personal computer 4 and mp3 player 5 belong to the same domain so that the content on the mp3 player 5 is accessible by the personal computer 4.

After the mp3 player 5 has connected to the CCS 1, and information about its shareable content has been added to a catalog, the personal computer 4 can access and query the catalog. Using this information, the personal computer 4 can download or stream desired content from the mp3 player 5. Please note that this download or streaming does not need to involve the actual CCS 1, which in this configuration solely provides the content information.

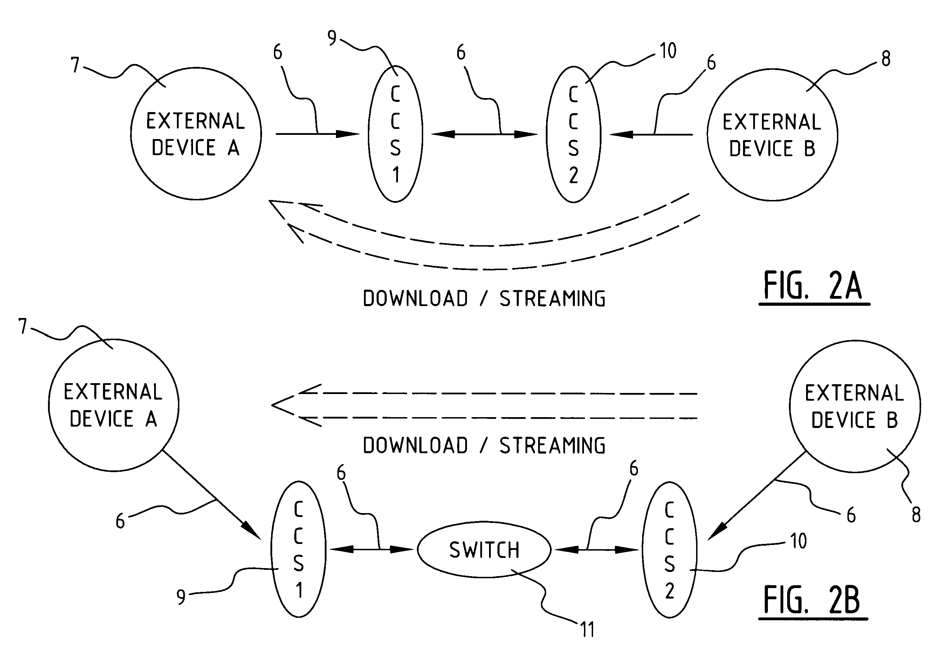

Figure 2a provides an example of a network with added complexity. This network comprises two content catalog servers CCS1 9 and CCS2 10. CCS1 9 is connected to an external device A 7, whereas CCS2 10 is connected to an external device B 8. Both devices are capable of announcing their shareable content to the corresponding CCS. CCS1 9 and CCS2 10 are connected so that they can exchange their catalogs. As a result, the catalog stored on CCS1 will also comprise information regarding content located on external device B 8 and vice versa. Consequently, external device A 7 can download or stream content from external device B 8.

The location information stored in the catalog provides enough information to external device A 7 to resolve the physical location of the content. This information could for instance comprise an IP address or an URL. Various known network topologies and protocols can be used to setup a network comprising a CCS.

Figure 2b presents a different network topology in which the two different content catalog servers, CCS1 9 and CCS2 10, are not directly connected. Instead, a switch 11 has been used. In this embodiment, it is shown that some external devices themselves may act as a feed through for the content catalog. In this embodiment, CCS1 9 and CCS2 10 can exchange their catalogs through the switch 11. The functionality of the CCS is therefore not limited to the domain it is located in.

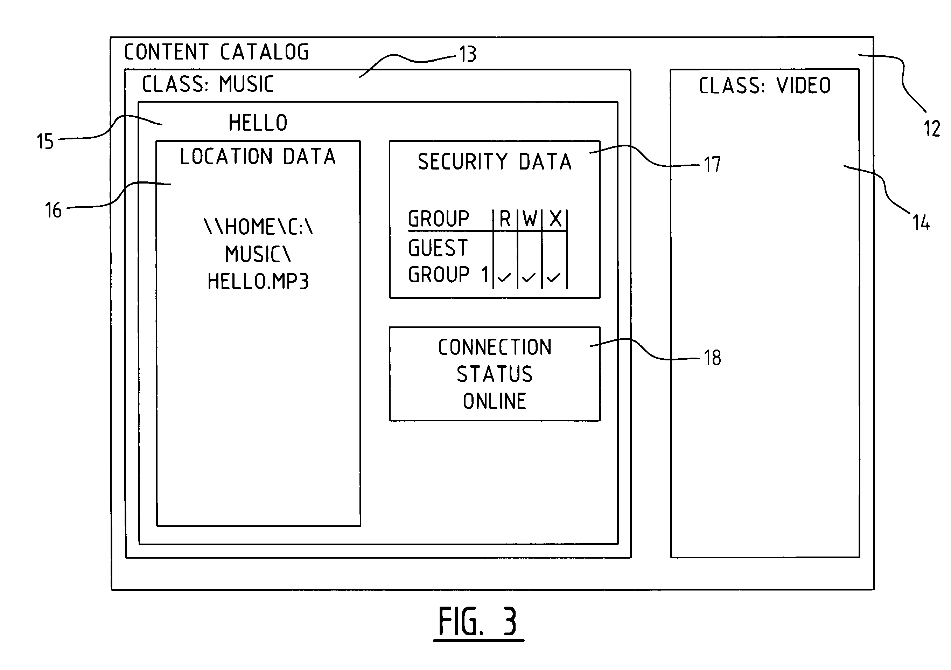

Figure 3 presents a block diagram of a content catalog 12 comprising content information. As illustrated, the catalog comprises two classes, i.e. music 13 and video 14. Items belonging to these classes each correspond to different content. In this embodiment, the content comprises an item named 'hello' 15 stored on an external device. Information regarding this content, i.e. the content information, comprises information about the location of this file 16, security data 17 and connection status 18. As shown in the figure, the location data 16 could be in the form of computer name:drive name:folder name:file name. Other formats are possible for instance in the form of an URL. This latter approach more resembles that of a browser. In figure 3, the security data 17 indicates that files are only readable (r), writeable (w) and executable (x) for users belonging to the group "group1". The connection status 18 illustrates if a connection to the relevant device is setup (online) and if the content is accessible provided the security requirements are met.

The present invention has been described in detail referring to specific embodiments thereof. However, the skilled person in the art may recognize that modifications, additions, or adjustments can be made without deviating from the scope of the present invention as defined by the following claims.

## Claims

1. A content catalog server comprising:
- a data-communication interface over which content information can be received from an external device, said content information comprising a list of shareable content stored on said external device,
- processing means to process said content information, **characterized in that** said processing means are arranged to incorporate said content information in a content catalog, wherein said content catalog can be queried and comprises information regarding location and connection status of said shareable content.

2. The content catalog server according to claim 1, **characterized in that** said content catalog server is arranged such that said content catalog can be queried by an external device having a data-communication link to said content catalog server.

3. The content catalog server according to claim 1, **characterized in that** said content catalog comprises a class structure corresponding to a type of said shareable content.

4. The content catalog server according to claim 2, **characterized in that** the content catalog server comprises filtering means which filter a query by said external device of said content catalog based on a type of shareable content supported by said external device.

5. The content catalog server according to claim 1, **characterized in that** said content catalog comprises security information relating to said shareable content.

6. The content catalog server according to claim 1, **characterized in that** the content catalog server is arranged to share said content catalog with an external device.

7. The content catalog server according to claim 1, **characterized in that** the content catalog server is comprised by a gateway of a network.

8. The content catalog server according to claim 1, **characterized in that** the content catalog server is OSGi compliant.

9. The content catalog server according to claim 1, **characterized in that** communication over said data-communication interface is Universal Plug and Play (UPnP) based.

10. The content catalog server according to claim 1, **characterized in that** said processing means are arranged to automatically update said content catalog based on received content information.
